Europäisches Patentamt

European Patent Office

Office européen des brevets

(19)

(11) Publication number: **0 069 095**
**A1**

(12) ## EUROPEAN PATENT APPLICATION

(21) Application number: 82850122.1

(22) Date of filing: 02.06.82

(51) Int. Cl.³: **C 04 B 21/00,** C 04 B 15/00,
C 04 B 31/02

(30) Priority: 26.06.81 SE 8104014

(43) Date of publication of application: 05.01.83
Bulletin 83/1

(84) Designated Contracting States: **AT BE CH DE FR GB IT
LI NL**

(71) Applicant: THERMOBASE S.N.C., 43 rue Ferté Alais,
F-91720 Maisse (FR)

(72) Inventor: Sandelin, Malte, 40, Les Bois du Cerf Etiolles,
F-91450 Soisy sur Seine (FR)
Inventor: Svensson, Percy, Församlingsgatan 3,
S-240 17 Södra Sandby (SE)

(74) Representative: Lindeström, Lennart et al, STENHAGEN
PATENTBYRA AB Karlavägen 18, S-114 31 Stockholm
(SE)

(54) A method in the manufacture of steam-cured inorganic insulating material of extremely low volumetric weight and having good heat-insulating properties.

(57) The invention relates to the macufacture of steam-cured inorganic insulating material from an expandable and solidifiable aqueous starting-material mixture containing hydraulic binder and siliceous material together with particles of steam-cured totally hydrophobized aerated light-weight concrete as ballast material.

EP 0 069 095 A1

# A METHOD IN THE MANUFACTURE OF STEAM-CURED INORGANIC INSULATING MATERIAL OF EXTREMELY LOW VOLUMETRIC WEIGHT AND HAVING GOOD HEAT-INSULATING-PROPERTIES

The present invention relates to a method in the manufacture of steam-cured inorganic insulating material of very low volumetric weight and having good heat-insulating properties. The invention particularly relates to one such method in which the starting material is an aqueous, starting mixture which contains one or more hydraulic binders, siliceous (silica-containing) material and light-weight-ballast material, and in which pore-forming agents are used to produce a porous structure. The pore-forming agent normally used is a substance which reacts with another substance in the mixture to produce a gas which causes the aqueous starting mixture to expand. In the majority of cases, this method presumes that the gas-generating substance is introduced into the starting mixture as it is being prepared, and that the mixture is then poured into a mould and allowed to expand while rising to a suitable height. A particularly common gas-generating substance used in this context is powdered aluminium metal, which reacts with the alkaline constituents of the hydraulic binder to form hydrogen gas. Conceivably, the porous structure can be obtained by admixing the starting mixture with foam-producing surfactants. In this latter case, it is usual practice to cast the mixture into a suitable form in which it can be cut after the aqueous starting mixture has been brought to foam. When the cast body has stabilized with respect to its dimensions, it can be allowed to set; the cast body is then steam-cured in an autoclave, into which highpressure steam is introduced.

A method of the kind mentioned in the introduction is known to the art (cf. Swedish Patent Specification No. 7306059-2). This known method teaches the use of lime and/or portland cement as the hydraulic binder, silica sand as a siliceous material of high silica content, and powdered aluminium as the pore-forming agent. As will be understood, in order to produce products which have high thermal-insulating properties it is necessary, in principle, to generate, or to introduce, large quantities of gas in bubble form in the aqueous starting mixture. It has been found difficult to manufacture a product of a volumetric weight in the region of 0.4 kg/dm³ or less, because of the labile character of the expanded or expanding mass and because of the tendency of the material to allow the gas which produces the porous structure to pass through said mass.

According to the above Patent Specification, which relates in particular to the manufacture of aerated light-weight concrete, the aforementioned difficulties can be overcome by adding expanded perlite or expanded vermiculite to the aforesaid starting mixture. The additive is stirred into the aforementioned mixture, immediately prior to casting the mixture in a mould, the mixture being permitted to expand in the mould and solidify into a coherent body. The light-weight additive is added in an amount of up to 5-50 per cent by weight, calculated on the dry solids content of the starting mixture. By varying the amount of dry solids present in the starting mixture, it is possible to vary the volumetric weight of the ultimate steam-cured insulating material from about 0.4 kg/dm³ downwards.

One disadvantage found with the addition of the aforementioned ballast materials to the starting mixture is that the problem concerning the lability of the cast mass is still not satisfactorily solved and that the permeability of the mass to hydrogen gas is not reduced to the desired extent. A further disadvantage is that such material as perlite and vermiculite must be heated in order to be used as light-weight-ballast materials in the known method. Furthermore, expanded perlite and expanded vermiculite have hydrophilic properties, causing the minerals when expanded to absorb and retain water. This menas that a high percentage of the water present in an aqueous mixture of starting materials, including aerated light-weight concrete raw materials and light-weight-ballast material, is absorbed and retained in said ballast material.

It has now been found that the aforementioned disadvantages can be eliminated, or at least substantially overcome when the method recited in the introduction is carried out with a light-weight-ballast material comprising granules of totally-hydrophobized steam-cured aerated light-weight concrete instead of expanded perlite or expanded vermiculite granules. As a result of this expedient a minor part of the water present in the aqueous starting mixture will be absorbed by the light-weight ballast material. Since the water remains in the phase in which gas bubbles are formed during the casting and expansion process, the total amount of water required can be reduced to a relatively low level. This decreases the permeabili-ty of the mass to hydrogen gas, and the expanding mass becomes less labile. As a result, the material obtains a more favourable combination of properties. The same quantity of material will provide, upon expansion to comparable volumetric weights, improved strength properties with respect to the product containing granules of totally-hydrophobized steam-cured aerated light-weight concrete.

Granules of hydrophobic aerated light-weight concrete can be introduced into the starting mixture at a reduced water content, which can be achieved by subjecting the granules to a drying process. As a result of the hydrophobic quality of the aerated light-weight concrete, the amount of water re-absorbed upon contact with the aqueous starting mixture is considerably less, thereby rendering the combination of properties of the finished material still more favourable.

In accordance with one embodiment of the invention, the starting mixture may comprise starting mixtures which, in addition to the usual starting materials, also include hydrophobizing agents. Examples of such hydrophobizing agents include siloxane oils, particularly dimethyl siloxane oil, although other available siloxane oils can be used in which an ethyl group and/or phenyl group is present instead of the methyl group. The amount of organic silica compound added, particularly siloxane oil, can vary within a range of 0.05 - 0.50 per cent by weight calculated on the dry starting mixture.

According to one embodiment of the invention, the light-weight-ballast material added to the starting mixture may comprise crushed granules of steam-cured aerated light-weight concrete obtained by casting and expanding an expandable and solidifiable slurry of hydraulic binder and siliceous material, and by subsequently steam-curing the cast and expanded mass, the slurry being admixed with a hydrophobizing agent, such as silicon oil, prior to casting the mixture in a mould. In this respect, the hydraulic binder may comprise burnt lime and/or portland cement, optionally admixed with low quality hydraulic slags. The siliceous material may suitably be finely ground quartz sand having a silica content of more than about 50 per cent.

An expandable and solidifiable starting mixture for the manufacture of steam-cured inorganic insulating material in accordance with the invention may contain 15 - 50 per cent of a hydraulic binder, in the form of lime and/or portland cement, 10 - 70 per cent of a finely divided siliceous material, 0.1 - 0.5 per cent of a gas-developing agent in the form of aluminium metal and - as an additive in accordance with the invention - 5 - 30 per cent of a totally-hydrophobized steam-cured aerated light-weight concrete in the form of crushed material, preferably of a particle size up to about 3 mm. The aforementioned percentages relate to amounts by weight calculated on the weight of the dry solids content of the starting mixture.

By way of summary it can be said that it has been surprisingly found possible without difficulty, to manufacture a steam-cured inorganic insulating material of volumetric weights between 150 and 250 kg/m³ without adding light-weight-ballast material (e.g. expanded vermiculite) of such low volumetric weight that the properties of the insulating material are substantially determined by the additive. By using instead granules of hydrophobized steam-cured aerated light-weight concrete, preferably crushed aerated light-weight concrete, which in itself does not have a lower volumetric weight than the ultimate steam-cured aerated light-weight concrete, it is possible to obtain a product possessing extremely good heat-insulating properties. The material is also much stronger than products which contain expanded perlite and/or vermiculite and produced in accordance with known methods.

Consequently, the method according to the invention is also suitable for the manufacture of steam-cured inorganic insulating material possessing good heat-insulating properties, in the form of blocks, reinforced slabs, upon

0069095

which high strength demands are placed. As a result of the obligatory addition of granules of totally hydrophobized material the finished steam-cured product exhibits good hydrophilic properties, and thus the good heat-insulating properties of the product are not negatively effected under unfavourable conditions, such as high humidity, rain etc.

## Exemple 1

Steam-cured, inorganic insulating material was manufactured from burnt lime, Portland cement and quartz sand in accordance with the following composition:

Sand (ground to 2500 $cm^2$/g).............. 80 kg

burnt lime ................................. 15 kg

Portland cement ............................ 75 kg

aluminium powder ⎫
gypsum (semihydrate)⎭ .................... 10 kg

granules of crushed steam-cured,
hydrophobized aerated light-weight
concrete with reduced water content
obtained by drying <3 mm ................ 20 kg

water ..................................... 185 kg

The estimated volumetric weight of the resultant aerated light-weight concrete with the given quantity of aluminium powder added was 200 kg/$m^3$.

Subsequent to steam-curing the aerated light-weight concrete for five hours at a pressure of 9 atmospheres over pressure there was obtained a product which possessed the following properties:

Dry volumetric weight, kg/$dm^3$ .......... 0.20

compression strength, kg/$cm^3$ .......... 10

coefficient of thermal
conductivity W/m $^oC$ .................... 0.063

## Example 2

Steam-cured inorganic insulating material was manufactured from burnt lime, Portland cement and quartz sand in accordance with the following composition:

Sand (ground to 2500 $cm^2$/g) ............ 60 kg

burnt lime ............................... 10 kg

```
Portland cement ................... 60 kg
aluminium powder        ⎤
                        ⎬ ............ 10 kg
gypsum (semihydrate)    ⎦
granules of crushed steam-cured
totally hydrophobized aerated
light-weight concrete
              <3 mm ........ 10 kg
water ............................. 180 kg
```

The estimated volumetric weight of the resultant product with the given amount of aluminium powder added was 150 kg/m³.

Subsequent to being steam-cured for five hours at a pressure of 9 atmospheres over pressure there was obtained a product which possessed an extremely favourable combination of high compression strength and thermal insulating properties:

```
Dry volumetric weight, kg/dm³ .... 0.16
compression strength, kp/cm² ..... 5
coefficient of thermal
conductivity W/m °C .............. 0.054
```

### Exemple 3

Samples of steam-cured inorganic insulating material having the following volumetric weights and the properties set forth in the Table below were prepared in a manner similar to that recited in Examples 1 and 2

| Volumetric weight kg/m³ | Compression strength ($\sigma_p$) kp/cm² | λ-value W/m °C |
|---|---|---|
| 160 | 5 | 0.054 |
| 175 | 8 | 0.057 |
| 195 | 9 | 0.059 |
| 225 | 12 | 0.065 |
| 230 | 15 | 0.071 |

The totally hydrophobized steam-cured aerated light-weight concrete, the crushed granules (< 3 mm) of which were used as light-weight-ballast material, was obtained from an aqueous starting-material mixture of the following composition:

Sand ............................ 50 kg

Portland cement ................. 28 kg

burnt lime ...................... 12 kg

waste sludge .................... 8 kg

aluminium powder and

regulator ($CaSO_4 \frac{1}{2} \cdot H_2O$) ........ 2 kg

The resultant mixture, which weighed 100 kg, was admixed with 55 litres of water and 0.22 per cent of dimethylsiloxane oil having a viscosity of 1000 centistokes, calculated on the weight of the dry starting mixture. The resultant slurry was used as a casting mass.

The sand contained quartz and had a silica content of 70-80 per cent. The lime used comprised finely ground unslaked lime having a CaO-content of 88-92 per cent. The cement was of the normal Portland-cement type. The aluminium powder had a thin flake structure and contained approximately 90-95 per cent of free aluminium. Manufacture was carried out in the following manner. The quartz-containing sand was wet ground in a ball mill to form a comparatively readily flowable slurry having a high degree of fineness. The sand slurry was then thoroughly mixed with accurately measured quantities of cement, lime, waste sludge and additional water, to form a mass of suitable consistency. Subsequent to steam-curing the mass in an autoclave for 12 hours at a pressure of 10 atmospheres over pressure, there was obtained a product having a volumetric weight of 470 kg/m³, which was crushed to granules of particle size <3 mm, which were then dried.

0069095

CLAIMS

1. A method in the manufacture of steam-cured, inorganic insulating material of extremely low volumetric weight and having good insulating properties from an aqueous starting mixture containing one or more hydraulic binders, siliceous material and light-weight ballast material while using pore-forming agents to produce the porous structure, characterized by using granules of totally hydrophobized steam-cured aerated light-weight concrete as the light-weight ballast material.

2. A method according to Claim 1, wherein the starting mixture also contains hydrophobizing agents.

3. A method according to Claim 1 or Claim 2, wherein the hydrophobizing agent is silicon oil.

4. A method according to Claims 1-3, wherein the pore-forming agent comprises a gas-generating agent, such as aluminium metal powder.

5. A method according to Claims 1-4, wherein the light-weight ballast material comprises crushed granules of steam-cured aerated light-weight concrete obtained by casting and expanding an expandable and solidifiable slurry of one or more hydraulic binders and siliceous material, and subsequently steam-curing the cast and expanded mass, silicon oil being added to the slurry prior to casting.

6. A method according to Claim 5, wherein the expandable and solidifiable aqueous starting mixture used is one which contains 15-50 per cent of hydraulic binder in the form of lime and/or Portland cement and 10-70 per cent of siliceous material, 0.1 - 0.5 per cent of aluminium powder, and 5 - 30 per cent totally hydrophobized steam-cured aerated light-weight concrete in the form of crushed particles with particle sizes of up to about 3 mm, calculated on the dry solids content of the starting mixture.

7. A method according to Claim 6, wherein the totally hydrophobized steam-cured aerated light-weight concrete contains 0.05 - 0.50 per cent of silicon oil.

8.   A method according to Claims 6 or Claim 7, wherein the silicon oil is dimethyl silicon oil.

9.   A method according to Claims 1-8, wherein the volumetric weight of the finished steam-cured inorganic insulating material is set to a value in the region of 135-250 kg/m$^3$.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-2 547 908 (PERLMOOSER ZEMENTWERKE) *Claims 1-3,5,6,9* | 1,2,5 | C 04 B 21/00 C 04 B 15/00 C 04 B 31/02 |
| Y | DE-A-2 221 678 (YTONG) *Claims 1,16,18* | 1,4,6, 9 | |
| Y | GB-A-1 572 783 (METALLEICHTBAUKOMBINAT) *Claim 1* | 1,4 | |
| Y | US-A-3 352 699 (J.S.C.WHEELER) *Claim 1* | 1 | |
| A | DE-A-2 524 147 (YTONG) | | |

TECHNICAL FIELDS SEARCHED (Int. Cl. 3)

C 04 B 21/00
C 04 B 31/00
C 04 B 15/00
C 04 B 13/00

The present search report has been drawn up for all claims

| Place of search THE HAGUE | Date of completion of the search 29-09-1982 | Examiner DAELEMAN P.C.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82